# EUROPEAN PATENT APPLICATION

(11) **EP 2 708 986 A1**
(43) Date of publication of application: **19.03.2014**
(21) Application number: 12782531.3
(22) Date of filing: 06.03.2012
(51) Int. Cl.: G06F 3/041, G06F 3/023, G06F 3/048, H03M 11/04, H04M 1/00, H04M 1/02

(54) **INPUT DEVICE**

(30) Priority: 11.05.2011 JP 2011106064
(71) Applicant: NEC CASIO Mobile Communications, Ltd., Kawasaki-shi Kanagawa 211-8666 (JP)
(72) Inventor: EBATA, Susumu, Kawasaki-shi, Kanagawa 211-8666 (JP)
(74) Representative: Vossius & Partner
(86) International application number: PCT/JP2012/055656
(87) International publication number: WO 2012/153565

(57) **Abstract**

Display unit (110) displays a plurality of input areas for entering information. Input unit (120) enters information based on one of the input areas which includes a position that is touched or approached. Area editor (130) edits a layout of the input areas based on an input applied to input unit (120). Area controller (140) controls the input areas displayed by display unit (110) based on the edited layout from area editor (130).

## Description

### Technical field:

The present invention relates to an input device, an input method, and a program for entering information.

### Background art:

Cellphones available in recent years have an input device that incorporate a touch panel which allows the user to enter characters by touching the touch panel with a finger or bringing a finger close to the touch panel. For entering characters or dialing numbers into the input device combined with the touch panel, the user presses input key buttons displayed on the touch panel to make the entry.

The user of a small input device such as a cellphone is able to make entries into the input device by carrying the cellphone with one hand and by pressing displayed keys on the touch panel with a finger, e.g., the thumb, of the hand, so that the user does not need to use the other hand. When the user enters characters in this manner, the user finds it difficult to press input keys displayed in the vicinity of the base of the thumb and is liable to make entry errors. Therefore, the input device is not user friendly.

Technologies have been developed for changing the layout of input keys to a suitable layout depending on the entry to be made (see, for example, Patent documents 1, 2).

### Prior technical documents:

### Patent documents:

Patent document 1: JP2008-027183A
Patent document 2: JP2010-182071A

### Problems to be solved by the invention:

According to the technologies disclosed in Patent documents 1, 2, however, inasmuch as the layout of input keys is changed to a preset layout, the layout of input keys may not necessarily be changed to an input key layout that is user friendly.

It is an object of the present invention to provide an input device, an input method, and a program which will solve the above problems.

### Means for solving the problems:

According to the present invention, an input device includes:
a display unit that displays a plurality of input areas for entering information;
an input unit that enters information based on one of the input areas which includes a position that is touched or approached;
an area editor that edits a layout of the input areas based on an input applied to the input unit; and
an area controller that controls the input areas displayed by the display unit based on the edited layout from the area editor.

According to the present invention, an input method for entering information includes:
a process of displaying a plurality of input areas for entering information;
an input process of entering information based on one of the input areas which includes a position that is touched or approached;
a process of editing a layout of the input areas based on an input applied in the input process; and
a process of controlling the displayed input areas based on the edited layout.

According to the present invention, a program controls a computer to execute:
a procedure for displaying a plurality of input areas for entering information;
an input procedure of entering information based on one of the input areas which includes a position that is touched or approached;
a procedure for editing a layout of the input areas based on an input applied in the input procedure; and
a procedure for controlling the displayed input areas based on the edited layout. Advantages of the invention:

As described above, the present invention is able to display input keys that are user friendly.

### Brief description of the drawings:

Fig. 1 is a diagram showing an input device according to an exemplary embodiment of the present invention;
Fig. 2 is a diagram showing a detailed configuration of the input device shown in Fig. 1;
Fig. 3 is a table showing by way of example an association between actions and layouts of input areas that are stored in a memory shown in Fig. 2;
Fig. 4 is a view showing by way of example the appearance of the input device shown in Fig. 2;
Fig. 5 is a view showing by way of example a layout of input areas displayed on a display unit shown in Fig. 2;
Fig. 6 is a flowchart of an editing process for editing a layout of input areas according to the exemplary embodiment;
Fig. 7 is a view showing the manner in which an edit key shown in Fig. 5 is selected;
Fig. 8 is a view showing by way of example an edit menu displayed on the display unit;
Fig. 9 is a view showing by way of example a size menu displayed on the display unit;
Fig. 10 is a view showing by way of example a style menu displayed on the display unit;
Fig. 11 is a view showing by way of example an action menu displayed on the display unit;
Fig. 12 is a view showing by way of example a registration menu displayed on the display unit in a registration process;
Fig. 13 is a flowchart of a display process for controlling and displaying a layout of input areas according to the exemplary embodiment;
Fig. 14 is a view showing the manner in which the input device is held by both hands;
Fig. 15 is a view showing the manner in which the input device is held by a left hand;
Fig. 16 is a view showing the manner in which the input device is held by a right hand;
Fig. 17 is a view showing by way of example input areas laid out on the display unit; and
Fig. 18 is a view showing by way of example input areas laid out on the display unit after a learning key is selected while input areas are being laid out as shown in Fig. 17.

### Mode for carrying out the invention:

An exemplary embodiment of the present invention will be described below with reference to the drawings.

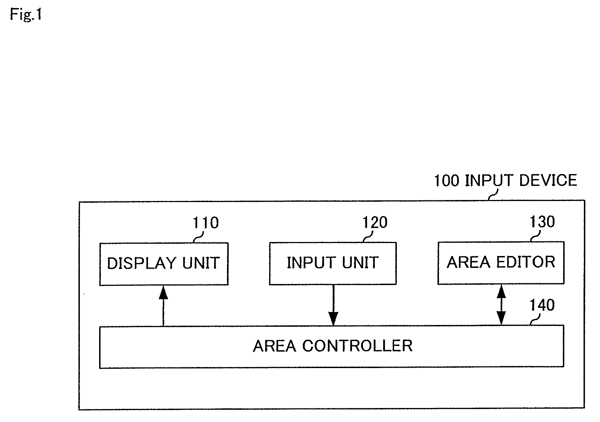

Fig. 1 is a diagram showing an input device according to an exemplary embodiment of the present invention.

As shown in Fig. 1, input device 100 according to the present exemplary embodiment has display unit 110, input unit 120, area editor 130, and area controller 140. Input device 100 is applicable as a device having a touch panel function, such as a cellphone, a mobile terminal, a tablet or notebook PC (Personal Computer), an electronic book terminal, a smartphone, a PDA (Personal Digital Assistant), a game machine, or the like.

Display unit 110 is a display for displaying a plurality of input areas for entering information. The input areas represent general input keys with numerals, alphabetical letters, or Japanese kana characters displayed thereon, and control keys for entering instructions such as making a call, terminating a call, clearing data, and making a decision.

Input unit 120 enters information based on one of the input areas which includes a position where display unit 110 is touched or approached. For example, when a finger touches an input area representing an input key marked "1", input area 120 enters "1" into input device 100. Display unit 110 and input unit 120 jointly make up a touch panel.

Area editor 130 edits the layout of input areas. Area editor 130 also edits the shape (size, style, etc.) of input areas in addition to the layout of input areas. For editing the layout and shape of input areas, input unit 120 is used, and area editor 130 edits input areas based on the contents of operations (inputs) on input unit 120.

Area controller 140 controls input areas displayed on display unit 110 based on an edited result from area editor 130. Specifically, area controller 140 controls the layout of input areas displayed on display unit 110 to change to a layout edited by area editor 130. If area editor 130 edits the layout and shape of input areas, then area controller 140 controls the layout and shape of input areas displayed on display unit 110 to change to the layout and shape edited by area editor 130.

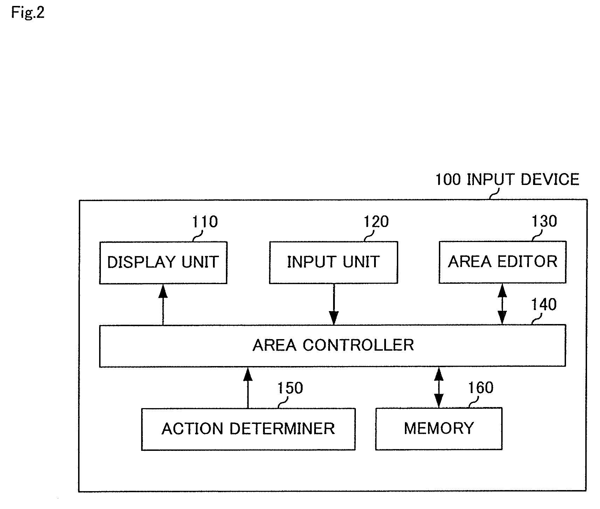

Fig. 2 is a diagram showing a detailed configuration of input device 100 shown in Fig. 1.

As shown in Fig. 2, input device 100 according to the present exemplary embodiment has display unit 110, input unit 120, area editor 130, area controller 140, action determiner 150, and memory 160. Fig. 2 shows only those of the components of input device 100 which are relevant to the present invention.

Display unit 110 is identical to the display unit shown in Fig. 1.

Input unit 120 identical to the input unit shown in Fig. 1.

Area editor 130 is identical to the area editor shown in Fig. 1.

Action determiner 150 determines a given action. For example, action determiner 150 comprises a pressure sensor, and determines which one of the left and right hands of the user is holding input device 100 based on the pressure detected thereby. Action determiner 150 then outputs the determined action to area controller 140.

Memory 160 stores actions determined by action determiner 150 and layouts edited by area editor 130, in association with each other.

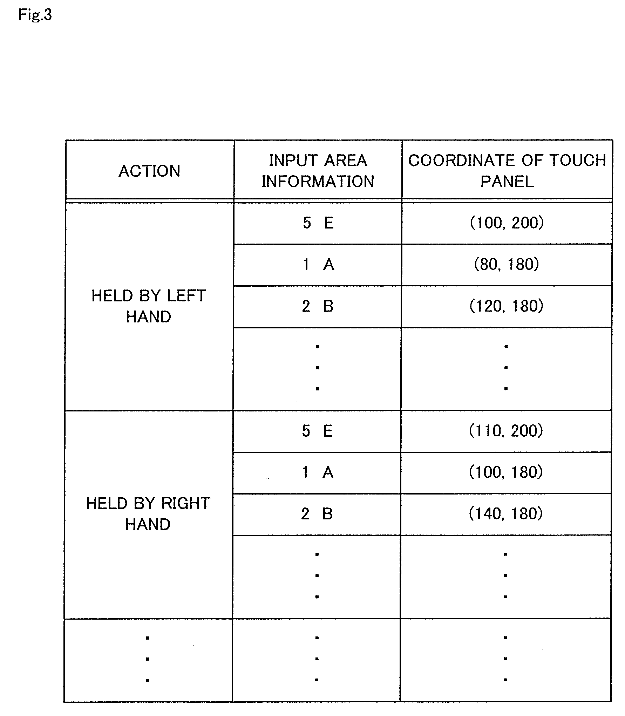

Fig. 3 is a table showing by way of example an association between actions and layouts of input areas that are stored in memory 160 shown in Fig. 2.

Memory 160 shown in Fig. 2 stores actions, input area information, and coordinates in association with each other as shown in Fig. 3.

"ACTIONS" represents the contents of actions determined by action determiner 150.

"INPUT AREA INFORMATION" represents information indicative of input areas. As shown in Fig. 3, it may represent numerals, characters, etc. that are entered when input areas are selected.

"COORDINATES" represents coordinates on display unit 110 that displays input areas, and indicates layouts of input areas. The coordinates may be coordinates of the centers of input areas or coordinates of given positions (e.g., upper right comers) in input areas.

Area controller 140 reads, from memory 160, the layout of input areas which corresponds to an action determined by action determiner 150. Area controller 140 then controls the layout of input areas displayed on display unit 110 to change to the layout read from memory 160. Specifically, if the layout of input areas read from memory 160 is different from the layout that is presently displayed on display unit 110, then area controller 140 changes the layout of input areas displayed on display unit 110 to the layout read from memory 160.

A specific control process carried out by area controller 140 will be described below with respect to the association shown in Fig. 3 that is stored in memory 160.

As shown in Fig. 3, an action "HELD BY LEFT HAND", input area information "5E" and coordinates (100, 200), input area information "1A" and coordinates (80, 180), and input area information "2B" and coordinates (120, 180) are associated with each other. Furthermore, an action "HELD BY RIGHT HAND", input area information "5E" and coordinates (110, 200), input area information "1A" and coordinates (100, 180), and input area information "2B" and coordinates (140, 180) are associated with each other. If action determiner 150 determines that the user holds input device 100 with the left hand, then the layout of input areas associated with the action "HELD BY LEFT HAND" is read from memory 160, the input area "5E" is placed at the coordinates (100, 200), the input area "1A" at the coordinates "80, 180", and the input area "2B" at the coordinates "120, 180". If action determiner 150 determines that the user holds input device 100 with the right hand, then the layout of input areas associated with the action "HELD BY RIGHT HAND" is read from memory 160, the input area "5E" is placed at the coordinates (110, 200), the input area "1A" at the coordinates "100, 180", and the input area "2B" at the coordinates "140, 180".

If area editor 130 edits the layout and shape of input areas, then memory 160 may store an action determined by action determiner 150 and the layout and shape edited by area editor 130. In this case, area controller 140 reads the layout and shape of input areas corresponding to the action determined by action determiner 150 from memory 160, and controls the layout and shape of input areas displayed on display unit 110 to change to the layout and shape read from memory 160. In other words, if the layout and shape of input areas read from memory 160 are different from the layout and shape presently displayed on display unit 110, then area controller 140 changes the layout and shape of input areas displayed on display unit 110 to change to the layout and shape read from memory 160.

The association stored in memory 160 may be any association insofar as it allows area controller 140 to acquire the layout and shape of input areas corresponding to the action determined by action determiner 150.

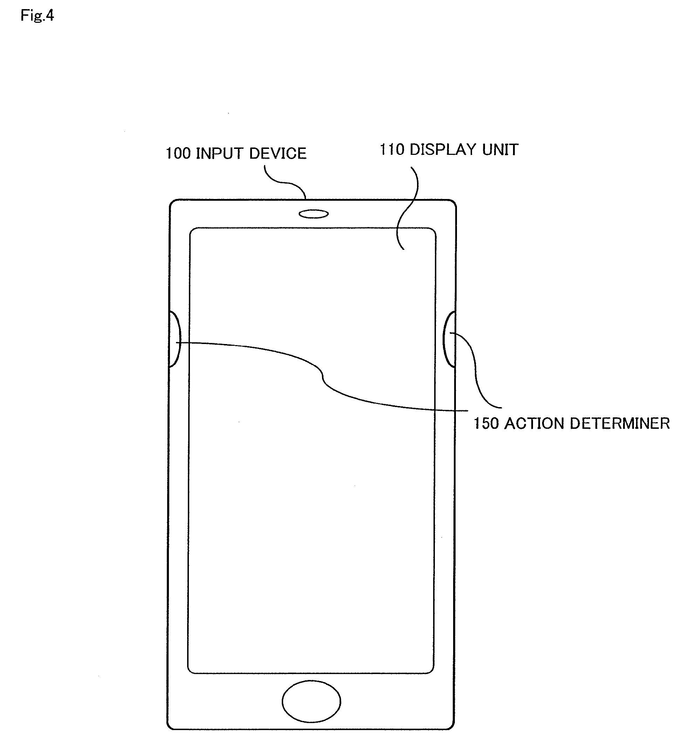

Fig. 4 is a view showing by way of example the appearance of input device 100 shown in Fig. 2.

As shown in Fig. 4, input device 100 shown in Fig. 2 has dents defined in respective left and right side surfaces of its casing as action determiners 150. The dents should preferably be positioned in a range engaged by the index finger when the user holds input device 100 with one hand. If action determiner 150 on the right side in Fig. 4 detects pressure, then it determines that input device 100 is held by the left hand. If action determiner 150 on the left side in Fig. 4 detects pressure, then it determines that input device 100 is held by the right hand.

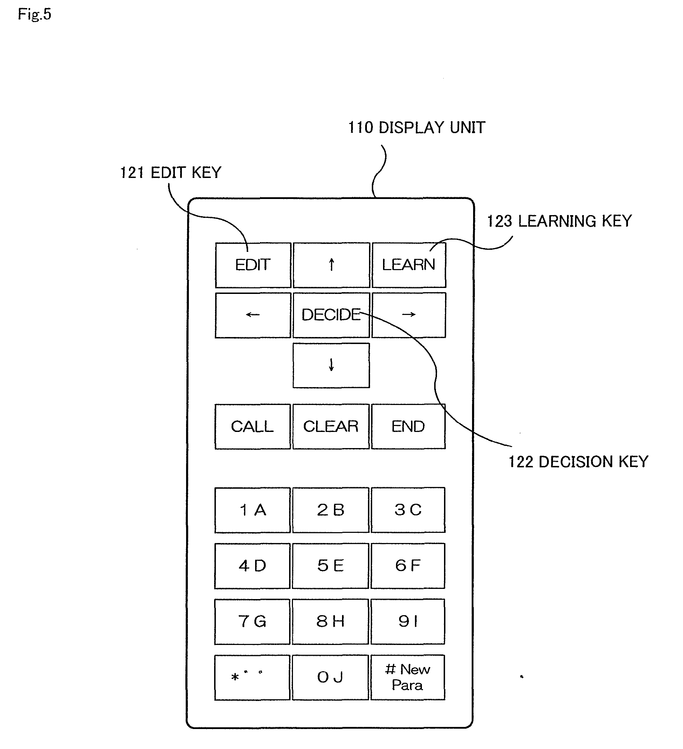

Fig. 5 is a view showing by way of example a layout of input areas displayed on display unit 110 shown in Fig. 2.

As shown in Fig. 5, input areas representing edit key 121, decision key 122, learning key 123, arrow (direction) keys, a clear key, a call making key, a call terminating key, and alphanumeric keys, etc. are displayed in a given layout on display unit 110.

An input method according to the present exemplary embodiment will be described below. First, an editing process for editing a layout of input areas according to the present exemplary embodiment will be described below.

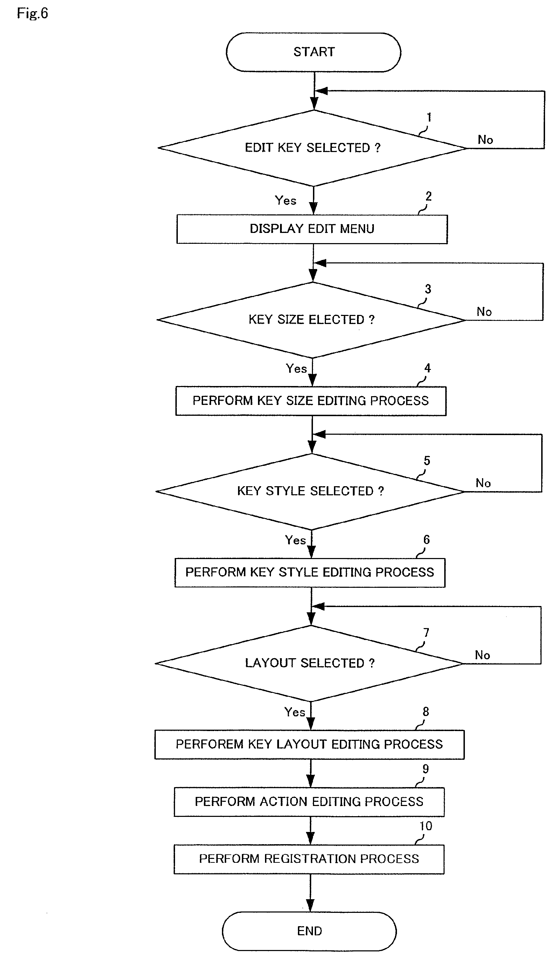

Fig. 6 is a flowchart of an editing process for editing a layout of input areas according to the present exemplary embodiment.

In step 1, input unit 120 judges whether or not edit key 121 shown in Fig. 5 is selected. Input unit 120 judges that edit key 121 is selected if it detects that a finger is touching or moving close to edit key 121. Input unit 120 judges that other keys are selected in the same manner.

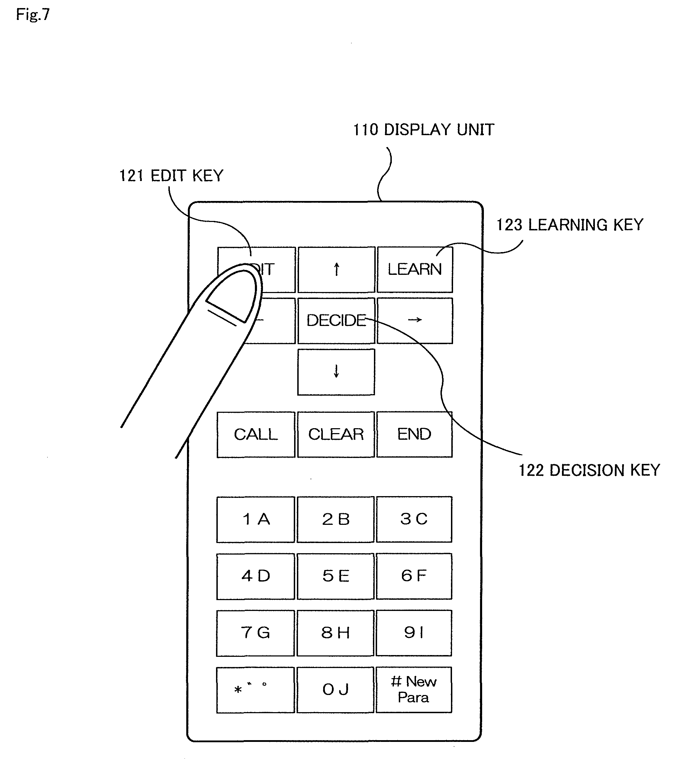

Fig. 7 is a view showing the manner in which edit key 121 shown in Fig. 5 is selected.

As shown in Fig. 7, when edit key 121 is touched or approached by a finger, input unit 120 judges that edit key 121 is selected.

After input unit 120 has judged that edit key 121 is selected, display unit 110 displays an edit menu in step 2.

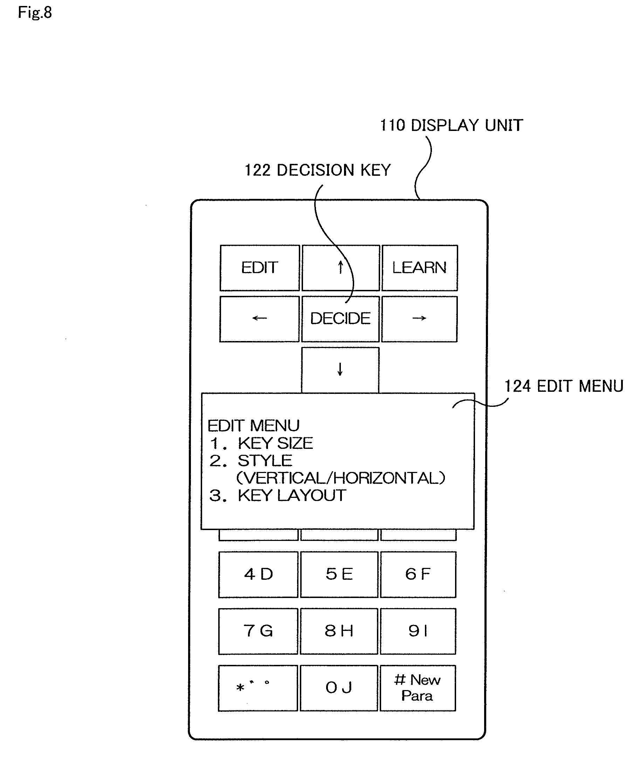

Fig. 8 is a view showing by way of example an edit menu displayed on display unit 110.

As shown in Fig. 8, display unit 110 displays thereon edit menu 124 for editing input areas. Edit menu 124 includes a menu for editing the size of input areas (key size), the shape, i.e., style, of input areas, and the layout of input areas (key layout).

If "1. KEY SIZE" on edit menu 124 shown in Fig. 8 is selected in step 3, then area editor 130 performs a key size editing process for editing the size of input areas in step 4.

In the key size editing process, display unit 110 displays a size menu for designating the size of input areas.

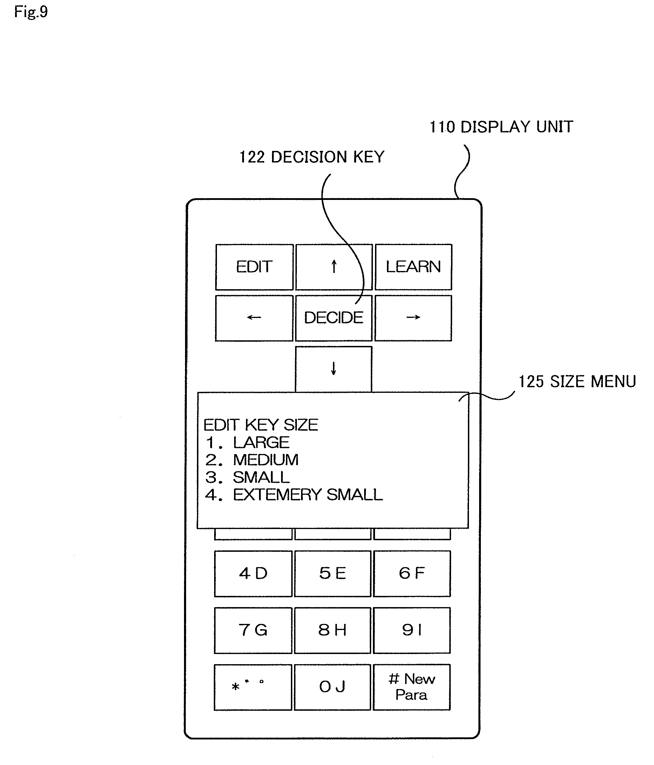

Fig. 9 is a view showing by way of example a size menu displayed on display unit 110.

As shown in Fig. 9, display unit 110 displays thereon size menu 125 for editing the size of input areas. Size menu 125 comprises a menu for selecting the size of input areas (key size) from among "1. LARGE", "2. MEDIUM", "3. SMALL", and "4. EXTREMELY SMALL". The user decides on the size of the input areas by selecting a desired one from among the four options. The user carries out the selecting process with respect to each of input areas (keys) whose size needs to be edited. Size menu 125 in Fig. 9 is shown by way of example only. Other size menus which show "EXTREMELY LARGE" and numerical values representing sizes may be used. Sizes may be different when the user holds input device 100 in a vertical orientation and when the user holds input device 100 in a horizontal orientation.

When the size editing process is completed with respect to all the input areas whose size needs to be edited and decision key 122 is selected, display unit 110 displays edit menu 124 shown in Fig. 8.

If "2. STYLE (VERTICAL/HORIZONTAL)" on edit menu 124 shown in Fig. 8 is selected in step 5, then area editor 130 performs a key style editing process for editing a style of input areas in step 6.

Alternatively, when the size editing process is completed with respect to all the input areas whose size needs to be edited and decision key 122 is selected, area editor 130 may start a key style editing process without display unit 110 displaying edit menu 124.

In the key style editing process, display unit 110 displays a style menu for designating the style of input areas.

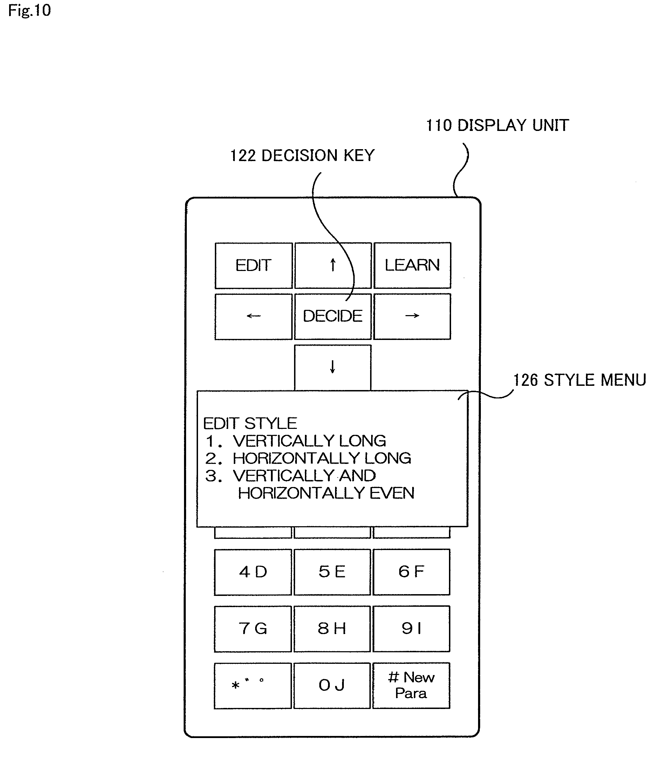

Fig. 10 is a view showing by way of example a style menu displayed on display unit 110.

As shown in Fig. 10, display unit 110 displays thereon style menu 126 for editing the style of input areas. Style menu 126 is a menu for selecting the style (vertical/horizontal) of input areas from among "1. VERTICALLY LONG", "2. HORIZONTALLY LONG", and "3. VERTICALLY AND HORIZONTALLY EVEN". The user decides on the style of input areas by selecting a desired one from among the three options. The user carries out the selecting process with respect to each of input areas (keys) whose style needs to be edited. Style menu 126 in Fig. 10 is shown by way of example only. Other style menus which show "CIRCULAR", "ELLIPTICAL", etc. may be used.

When the style editing process is completed with respect to all the input areas whose style needs to be edited and decision key 122 is selected, display unit 110 displays edit menu 124 shown in Fig. 8.

If "3. KEY LAYOUT" on edit menu 124 shown in Fig. 8 is selected in step 7, then area editor 130 performs a key layout editing process for editing the layout of input areas in step 8.

Alternatively, when the style editing process is completed with respect to all the input areas whose style needs to be edited and decision key 122 is selected, area editor 130 may start a key layout editing process without display unit 110 displaying edit menu 124.

In the key layout editing process, area editor 130 edits the position of each of the input areas. For example, display unit 110 may highlight each displayed key (e.g., by changing the display color thereof or enlarging the frame of each displayed key, etc.) and the user may bring a finger into touch with or close to a position where the highlighted key is to be placed, thereby determining the position of the key (input area).

When the layout editing process is completed with respect to all the input areas whose layout needs to be edited and decision key 122 is selected, area editor 130 performs an action editing process for editing the contents of an action in step 9.

In the action editing process, display unit 110 displays an action menu for designating an action.

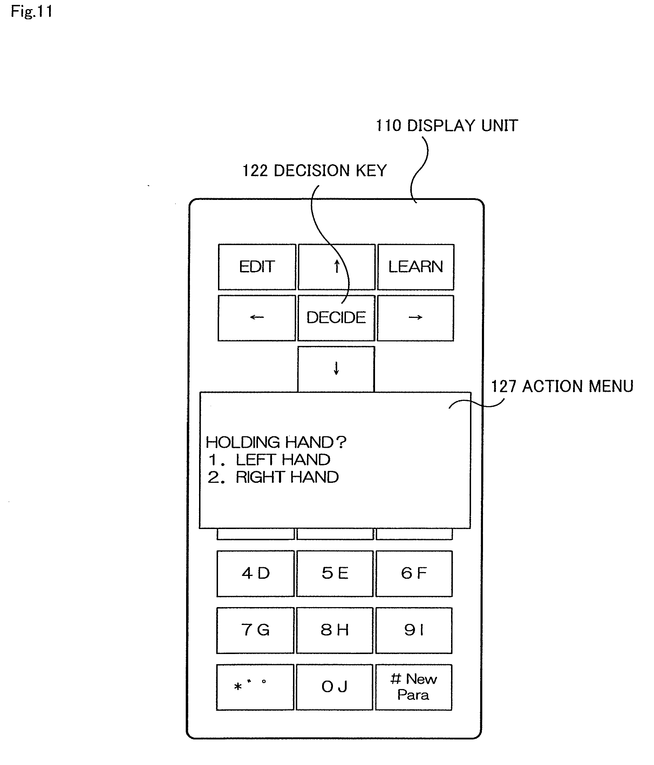

Fig. 11 is a view showing by way of example an action menu displayed on display unit 110.

As shown in Fig. 11, display unit 110 displays thereon action menu 127 for editing an action. Action menu 127 is a menu for selecting contents of an action to be determined by action determiner 150 from "1. LEFT HAND" and "2. RIGHT HAND". The user decides on contents of an action to be determined by an action determiner 150 by selecting a desired one of the two options. Action menu 127 in Fig. 11 is shown by way of example only. Other action menus which show "IN COMMON WITH LEFT AND RIGHT HANDS", etc. may be used.

When the contents of an action to be determined by action determiner 150 are selected, the action editing process is completed, and area controller 140 performs a registration process for registering the contents edited thus far in memory 160 in step 10.

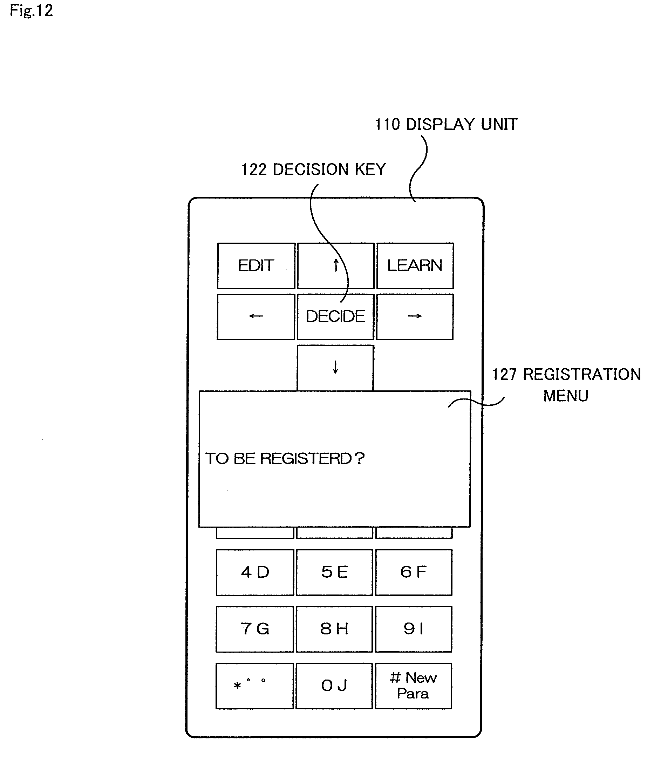

Fig. 12 is a view showing by way of example a registration menu displayed on display unit 110 in a registration process.

As shown in Fig. 12, display unit 110 displays thereon registration menu 128 which represents a message for confirming whether or not edited contents are to be registered.

If the user selects decision key 122 while registration menu 128 is being displayed, then the registration process is completed.

According to the editing process, a plurality of registration entries may be made rather than one registration entry with respect to each of the left and right hands. Furthermore, a plurality of registration entries may be made regardless of an action that is made as representing the left hand or the right hand, i.e., by designating "IN COMMON WITH LEFT AND RIGHT HANDS" in editing an action.

The display process for controlling and displaying input areas according to the present exemplary embodiment will be described below.

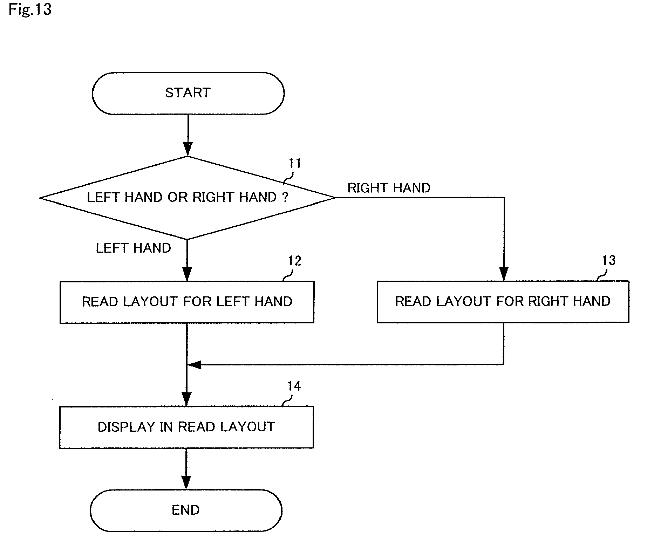

Fig. 13 is a flowchart of a display process for controlling and displaying the layout of input areas according to the present exemplary embodiment.

In step 11, action determiner 150 judges which one of the left and right hands the user who is holding input device 100 is using to hold input device 100.

If action determiner 150 judges that the user is holding input device 100 with the left hand, then area determiner 140 reads the layout of input area that corresponds to the action representing the left hand from memory 160 in step 12.

If action determiner 150 judges that the user is holding input device 100 with the right hand, then area determiner 140 reads the layout of input area that corresponds to the action representing the right hand from memory 160 in step 13.

In step 14, area controller 140 changes the layout of input areas displayed on display unit 110 to the layout read from memory 160, and the display unit 110 displays the changed layout of input areas. After the layout has been changed, information will be entered into the input areas in the changed layout.

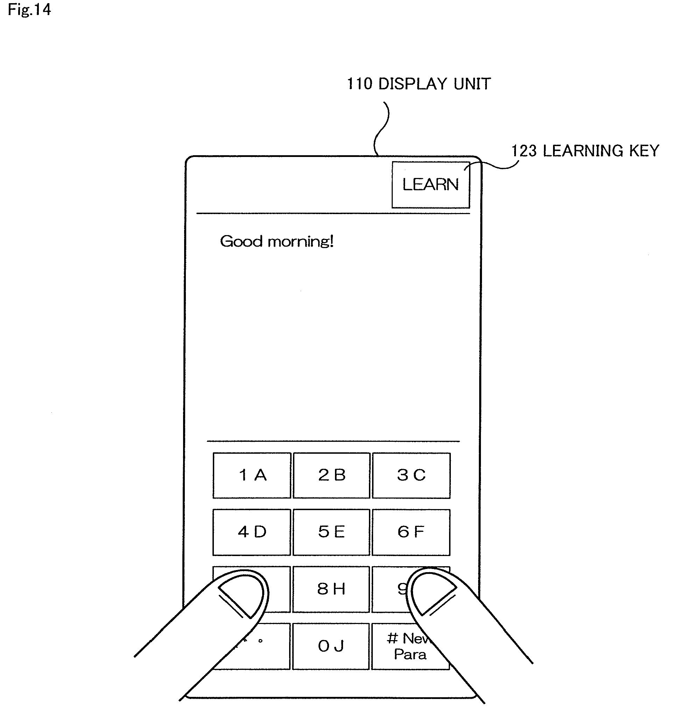

Fig. 14 is a view showing the manner in which input device 100 is held by both hands.

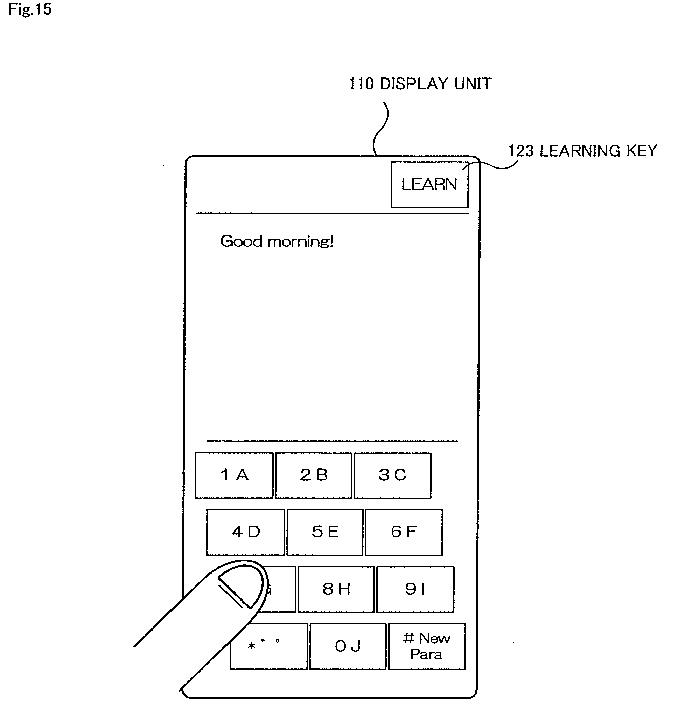

Fig. 15 is a view showing the manner in which input device 100 is held by the left hand.

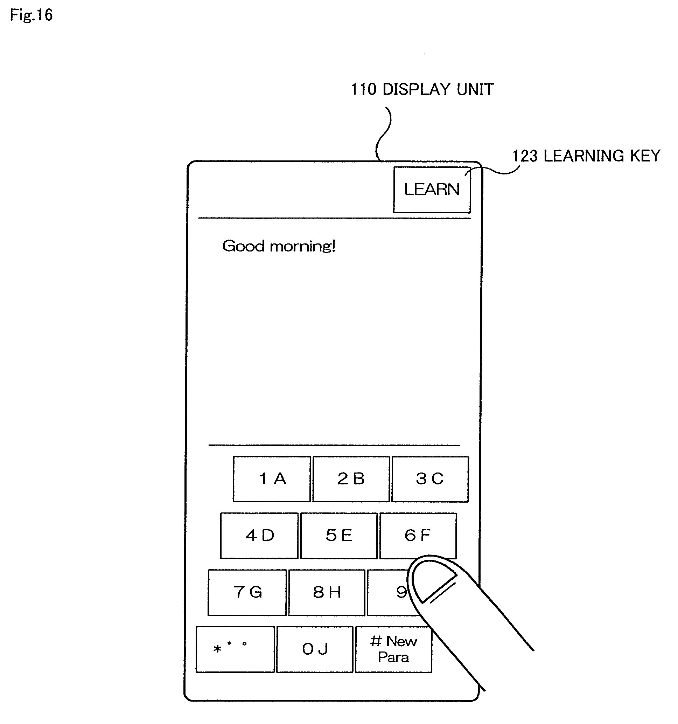

Fig. 16 is a view showing the manner in which input device 100 is held by the right hand.

As shown in Figs. 14 through 16, the layout of input areas is controlled depending on the way in which the user is holding input device 100.

It is assumed that a plurality of items are registered as described above, and a process of reading the registered items will be described below.

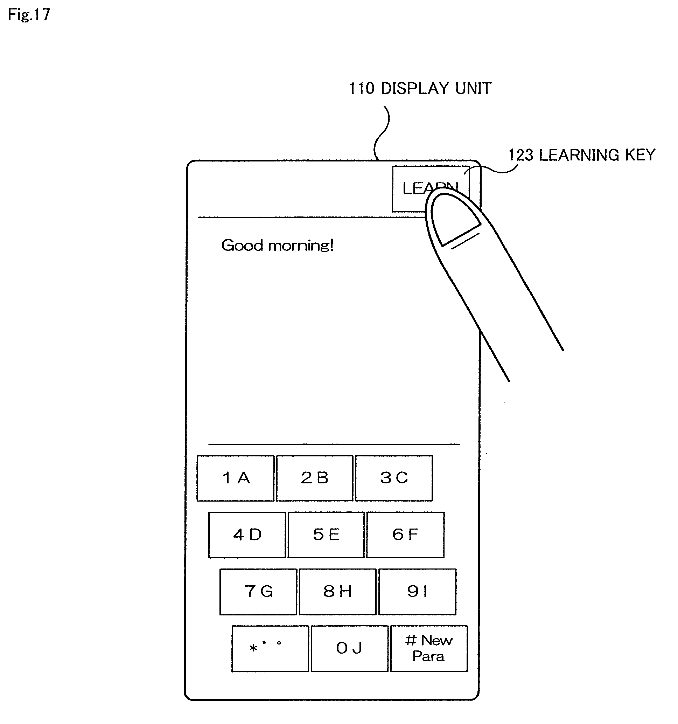

Fig. 17 is a view showing by way of example input areas laid out on display unit 110.

While input areas are being laid out on display unit 110 as shown in Fig. 17, when the user selects learning key 123, area controller 140 reads a plurality of registration entries from memory 160, and changes to the layout that is read.

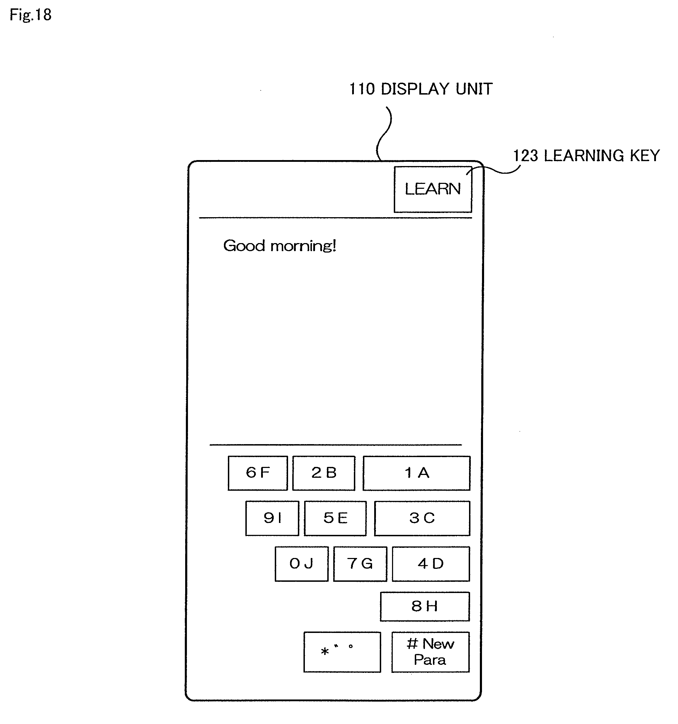

Fig. 18 is a view showing by way of example input areas that are laid out on display unit 110 after learning key 123 is selected while input areas are being laid out as shown in Fig. 17.

As shown in Fig. 18, when learning key 123 is selected while input areas are being laid out on display unit 110 as shown in Fig. 17, area controller 140 reads one of a plurality of registration entries from memory 160 and changes to the layout that is read.

As described above, if a plurality of registration entries are made, each time learning key 123 is selected, area controller 140 successively reads the registration entries from memory 160, and changes to the layouts of the registration entries that are read.

The layout and shape of input areas may be registered with respect to each of the applications involved, and the layout and shape of input areas may be controlled depending on one of the applications that is activated.

In the above example, information that is displayed in the input areas represents numerals and characters (alphabetic characters "A" through "J" for illustrative purposes). The characters may include Japanese kana characters and alphabetic characters. Numerals, kana characters, and alphabetic characters (a, b, c, etc.) may be controlled so as to belong to positions that are different from each other. For example, "5" and "A" belong to the same input area in the above example. However, "5" and "A" may be controlled so as to belong to input areas that are different from each other. Furthermore, numerals and characters may be controlled so as to be displayed in different combinations, e.g., "5A" and "5E".

The layout of control keys such as edit key 121, decision key 122, and learning key 123 may also be controlled.

According to the present invention, as described above, the layouts of input keys (input areas) that the user prefers depending on the left and right hands that the user uses in holding the input device are stored. When the user holds the input device with one hand and enters characters, numerals, etc. on the touch panel by bringing a finger of the hand into touch with or close to the touch panel, the input device displays one of the layouts of input keys based on the hand that is determined as holding the input device. Therefore, the input device allows the user to enter information quickly with either one of the hands and also to make less entry errors.

The processes that are carried out by the components of input device 100 described above may be performed by application-specific logic circuits. Alternatively, a computer program (hereinafter referred to as "program") that is descriptive of the processing sequences may be recorded in a recording medium that can be read by input device 100, and may be read and executed by input device 100. The recording medium that can be read by input device 100 may be a removable recording medium such as a floppy (registered trademark) disk, a magnetooptical disk, a DVD, a CD, or the like, or memory 160, a memory such as a ROM, RAM, or the like, or a HDD or the like in input device 100. The program recorded in the recording medium is read by a CPU (not shown) of input device 100, and performs the same processes as those described above under the control of the CPU. The CPU operates as a computer that executes the program read from the recording medium in which the program is recorded.

Although the present invention has been described with respect to the exemplary embodiment, the present invention is not limited to the above exemplary embodiment. Various changes that can be understood by those skilled in the art may be made to the configurations and details of the present invention within the scope of the present invention.

This application is based upon and claims the benefit of priority from Japanese Patent Application No. 2011-106064 filed on May 11, 2011, the entire disclosure of which is incorporated herein by reference.

## Claims

1. An input device comprising:
a display unit that displays a plurality of input areas for entering information;
an input unit that enters information based on one of the input areas which includes a position that is touched or approached;
an area editor that edits a layout of the input areas based on an input applied to said input unit; and
an area controller that controls the input areas displayed by said display unit based on the edited layout from said area editor.

2. The input device according to claim 1, further comprising:
an action determiner that determines a given action; and
a memory that stores the action and the layout of the input areas which has been edited by said area editor, in association with each other;
wherein said area controller reads the input area corresponding to the action determined by said action determiner from said memory, and controls the input areas displayed by said display unit.

3. The input device according to claim 2, wherein said area editor edits a shape of said input areas in addition to the layout of the input areas.

4. The input device according to claim 3, wherein said memory stores said action and the shape edited by said area editor in association with each other; and
said area controller reads the input area corresponding to the action determined by said action determiner from said memory, and controls the input areas displayed by said display unit.

5. The input device according to any one of claims 2 through 4, wherein said action determiner comprises a pressure sensor.

6. An input method for entering information, comprising:
a process of displaying a plurality of input areas for entering information;
an input process of entering information based on one of the input areas which includes a position that is touched or approached;
a process of editing a layout of the input areas based on an input applied in said input process; and
a process of controlling the displayed input areas based on the edited layout.

7. A program for controlling a computer to execute:
a procedure for displaying a plurality of input areas for entering information;
an input procedure of entering information based on one of the input areas which includes a position that is touched or approached;
a procedure for editing a layout of the input areas based on an input applied in said input procedure; and
a procedure for controlling the displayed input areas based on the edited layout.
